# EUROPEAN PATENT APPLICATION

(11) **EP 2 574 441 A1**
(43) Date of publication of application: **03.04.2013**
(21) Application number: 12181142.6
(22) Date of filing: 21.08.2012
(51) Int. Cl.: B29C 45/14

(54) **Composite molded body of metal member and molded resin member, and surface processing method of metal member**

(30) Priority: 28.09.2011 JP 2011211795
(71) Applicant: Hitachi Automotive Systems, Ltd., Hitachinaka-shi Ibaraki 312-8503 (JP)
(72) Inventor: Sutou, Mitsuru, Hitachinaka-shi, Ibaraki 312-0062 (JP); Onose, Shin, Hitachinaka-shi, Ibaraki 312-8503 (JP); Hosogaya, Takashi, Hitachinaka-shi, Ibaraki 312-8503 (JP)
(74) Representative: MERH-IP Matias Erny Reichl Hoffmann

(57) **Abstract**

Crater-like intricate indents (22) formed by melting and scattering of a metal surface are provided by irradiating with high density energy such as a laser beam (9) or an electron beam the surface (101) of the metal member. By using the irradiation condition that the crater-like indents (22) have partially overlapped regions (23), gangue-like prominent portions (11) formed by melting and scattering of the metal surface (101), a spherical metal splash formed at the top end of the prominent portions (11), and a roughed surface shape where particulate sputtering formed upon fabrication is secured. Thus, the molded resin intrudes into the constricted space formed by surface roughening to provide an anchoring effect against volume change of the resin in the direction where the resin is peeled from the surface of the metal member.

## Description

### BACKGROUND OF THE INVENTION

### 1. Field of the Invention

The present invention relates to a composite molded body formed by adhering and integrating different materials of a metal member and a molded resin member, such as a composite molded body composed of an electric terminal and a resin molded body for covering the terminal. The invention also relates to a method of processing a metal surface. The method includes a technique of roughening the surface of the metal member.

### 2. Description of the Related Art

Composite molded bodies formed of a metal member and a molded resin member for insulating the metal member have been used in various industrial fields. Such composite molded bodies aim at electric connection similar to connectors for a sensor, electric terminals disposed on an electronic circuit, or the like.

However, in existent composite molded bodies, the metal member and the molded resin member are not adhered at the boundary surface where they are to be in contact with each other during a solidification process of the molded resin member and due to the change of the circumstantial temperature, as a result of which a fine gap results at the boundary surface. Therefore, sufficient adhesion and air tightness cannot be ensured.

In this respect, JP-U-4-15248 describes a technique of forming unevenness at the surface of a metal member (lead frame) by sputter etching so as to improve the adhesion between the molded resin member (resin mold) and the metal member (lead frame).

In addition to the sand blasting and wet etching in the JP-U-4-15248, known surface roughening techniques involve a method of roughening the surface by chemical etching (Japanese Patent No. 3467471), a method of forming a compound adhesive layer on the surface of a metal member as a bonding agent with a resin member (JP-2007-221099-A, or WO04/041532), or a method of applying plating to the surface of a metal member to provide nodular prominence at specified portions of a metal member (JP-2-308555-A), etc.

Further, as a method of forming an unevenness at the surface of an artificial bone made of a titanium alloy, JP-1-240678-A discloses a method of irradiating, at a predetermined pitch, the surface of a titanium alloy with a laser beam to form a molten pool, solidifying a portion of a molten metal in a thread-like shape on the metal surface by jetting an assist gas thereby providing a steric pattern where indents at a predetermined pitch and thread-like solidified metal are intricate.

Further, JP-2007-220576-A discloses a method of forming fine dots on the surface of a metal by a laser thereby forming a roughened surface to improve adhesion with the resin member.

### SUMMARY OF THE INVENTION

The related arts described above involve a problem that the production time is increased and the cost is expensive since the surface roughening step includes a plurality of steps or a plurality of operations.

The present invention intends to provide a composite molded resin body without complicating the manufacturing step, excellent in at least one of adhesion or air tightness between different materials of a metal and a resin and, as a result, capable of providing an inexpensive composite molded resin body. Further, the invention also provides a method of roughening the surface of a metal member of a simple manufacturing step used for such purpose.

According to the invention, the object is attained by a method of irradiating with a high density energy beam such as a laser beam or an electron beam the surface of a metal member thereby forming grooves or indents at the surface of the metal member. The method further includes fluidizing the metal member melted by the heat of the high density energy beam and scattering the metal as sputtered splash (molten splash or fine powder) to the surface of the grooves or indents and the surface of the metal member between the groves, thereby forming a solidified portion of a metal splash on the surface of the grooves or indents or the surface of the metal member between them, the solidified portion including gangue-like prominent portions and other prominent portions each having a constriction and a spherical nodule at the top end of the other prominent portion.

Preferably, an intricate roughened surface can be formed by setting an irradiation condition that partial regions of crater-like indents overlap to each other and arranging the crater-like indents in plurality. However, a roughened surface with no substantial practical problem can also be formed when the grooves are formed by continuous irradiation of the beam.

Specifically, the roughened surface is preferably formed in a shape of intricately overlapped concavo-convex portions formed by solidification of a molten metal splash including gangue-like prominent portions formed by the flow of the molten metal and other prominent portions each having a constriction and a spherical nodule formed at the top end of the other prominent portion by deposition of a molten splash particle.

More preferably, a fine unevenness formed by solidification of sputtered splash (molten metal splash, fine powder) is formed on the surface of the solidified portion of the metal splash including solidified gangue-like prominent portions or other prominent portions each having a constriction and a spherical nodule at the top end of the other prominent portion, or on the surface of the grooves or indents at the periphery of the solidified portion of the metal splash and the surface of the metal member between them.

When the molten metal splash is a sputtered particle of a large particle diameter, the particle is sometimes deposited directly and solidified to the surface of the metal member (including craters and grooves) to form a nodule portion having a constriction.

Further, when the molten metal splash is a sputtered particle of a small particle diameter, the particle is sometimes deposited to the top end of the prominent portion formed at the surface of the metal member (including craters and grooves) to form a nodule.

Further, the nodule part may sometimes formed as a droplet of a molten metal suspended from the top end of the gangue-like prominent portion formed of the molten metal.

Further, a fine unevenness is also formed sometimes with a fine metal powder deposited and solidified to the surface of the gangue-like prominent portion or other prominent portion having a constriction and a spherical nodule at the top end of the other prominent portion.

As an example, a molded resin member is finally supplied to the roughed surface formed at the surface of the metal member, and the resin member intrudes into (flows into) a space formed by intricate gangue portions or constrictions formed in the roughened surface, and the molded resin is applied to the inside and the outside of the gangue-like portion or around the solidified portion of the nodular metal splash.

According to the invention as described above, since the roughened surface is formed by irradiation of the high density energy beam such as the laser beam or the electron beam, the manufacturing step is simple and the time for the manufacturing step is short and, as a result, an inexpensive surface processing technique can be provided.

When a composite molded resin body is formed by covering the roughened surface with the molded resin member and if volume change is caused upon solidification of the molded resin, the molded resin member undergoes a peeling action from the surface of the metal member (or volume change). In this case, an anchoring effect is additionally obtained against the peeling action (volume change) according to the invention.

Therefore, adhesion at the boundary surface where the metal member and the resin member are in contact to each other is provided. Further, the surface area at the boundary surface where the metal member and the resin member are in contact to each other is increased in the intricate space formed to the roughened surface of the metal member and, as a result, a penetration path of a fluid formed from the atmospheric side to the inside at the boundary surface where the metal member and the resin member are in contact to each other is less likely to be formed, thereby improving the sealing effect between the atmospheric side and the inside. As a result, air tightness at the boundary surface where the metal member and the resin member are in contact to each other is improved.

### BRIEF DESCRIPTION OF THE DRAWINGS

Other objects and advantages of the invention will become apparent from the following description of embodiments with reference to the accompanying drawings in which:
Fig. 1A is an enlarged view of a roughened surface according to an embodiment of the invention;
Fig. 1B is an enlarged view for a portion P indicated in Fig. 1A;
Fig. 2 is a perspective external view of a composite molded body of a sensor cover to which the invention is applied;
Fig. 3 is a fragmentary enlarged view of the composite molded body of the sensor cover to which the invention is applied;
Fig. 4A is an enlarged cross sectional view of a connector portion in a composite molded body of the sensor cover to which the invention is applied;
Fig. 4B is an enlarged view for a portion A in Fig. 4A;
Fig. 5 is a schematic view showing a method of forming a roughened surface according to an embodiment of the invention;
Figs. 6A-I to 6A-III are respectively a plan view, a side elevational view, and a schematic enlarged plan view for explaining the shape of a roughened surface according to the embodiment of the invention;

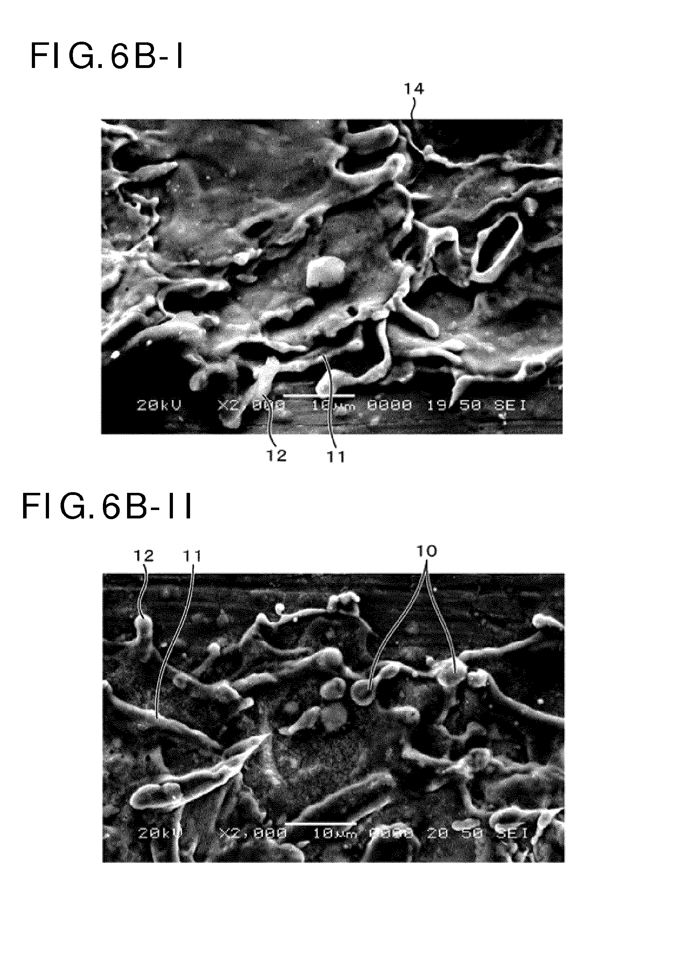

Figs. 6B-I and 6B-II show enlarged photographs for the roughened surface according to the embodiment of the invention;

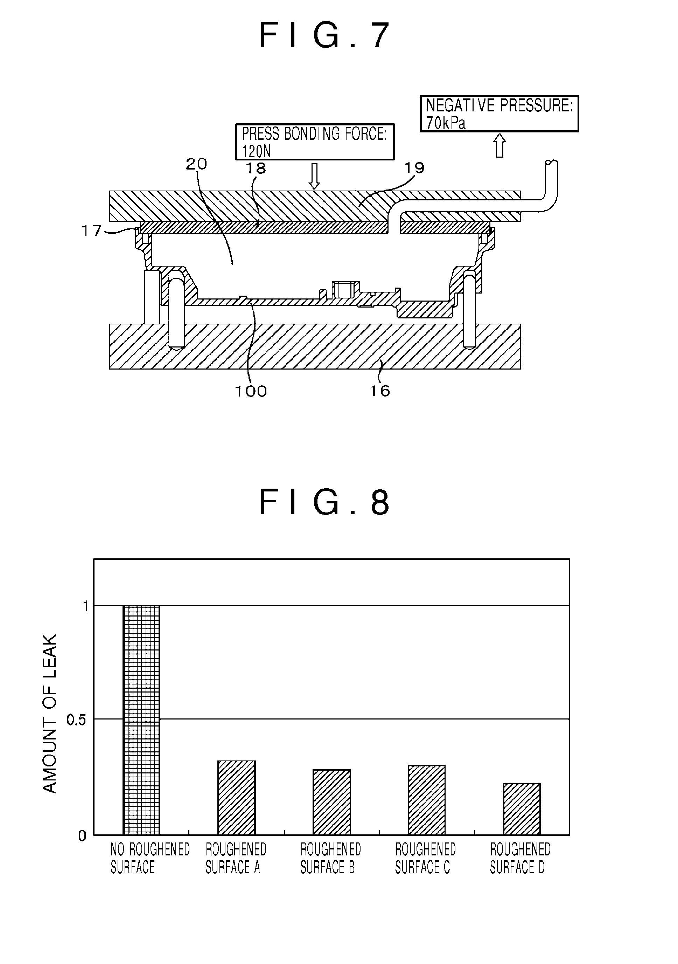

Fig. 7 is a cross sectional view of a testing apparatus used for the evaluation of air tightness according to the embodiment of the invention;
Fig. 8 is a graph showing a result of a test for the evaluation of air tightness of a composite molded body of a sensor cover according to the embodiment of the invention;

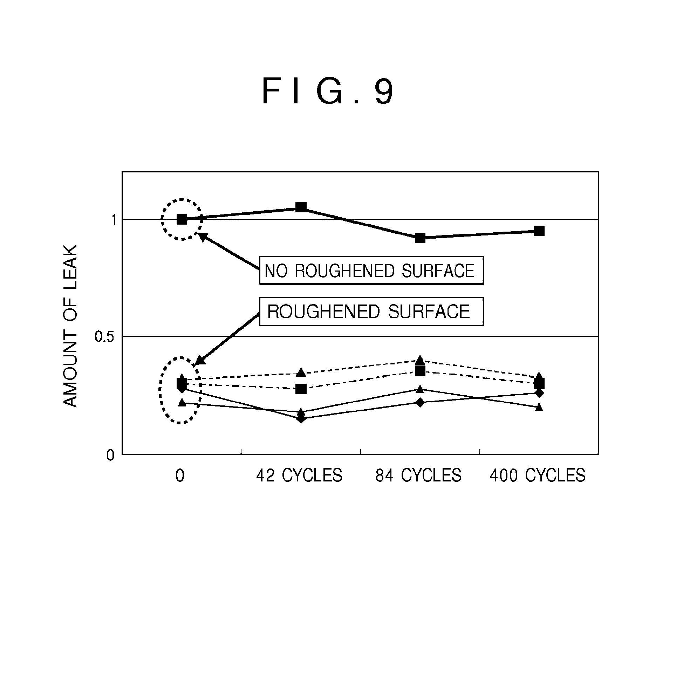

Fig. 9 is a graph showing the result of a test for evaluating air tightness after a heat cycle test on a composite molded body of a sensor cover according to the embodiment of the invention;

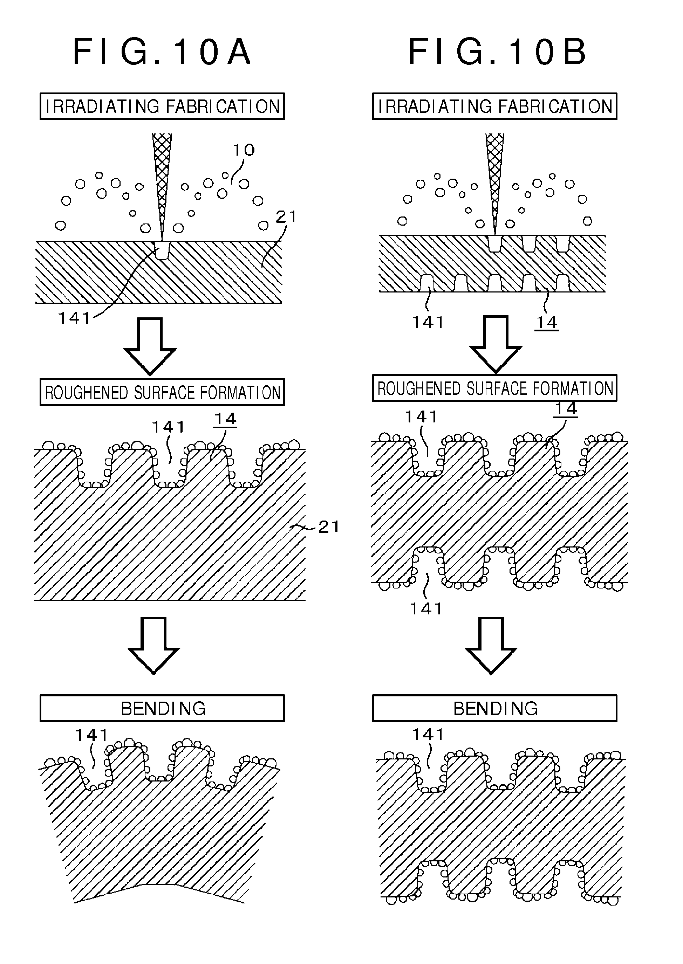

Figs. 10A and 10B are sectional views for explaining an example of a method of forming a roughened surface according to an embodiment of the invention in which
Fig. 10A is a sectional view in which the roughened surface portion is formed on one surface of a metal member, and
Fig. 10B is a sectional view in which the roughened surface portion is formed on both surfaces of the metal member; and

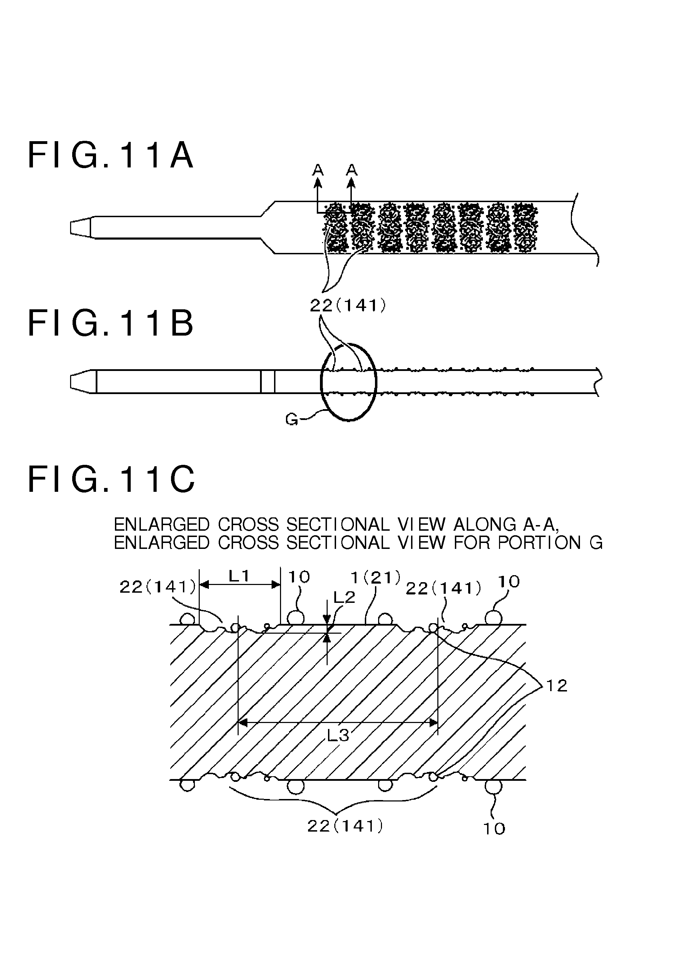

Figs. 11A to 11C are respectively a plan view, a side elevational view, and an enlarged cross sectional view along line A-A in the plan view (enlarged cross sectional view for a portion G in Fig. 11B) for explaining a shape of the roughened surface portion according to the embodiment of the invention.

### DESCRIPTION OF THE PREFERRED EMBODIMENTS

Preferred embodiments of a composite molded body of a metal member and a resin member are to be described with reference to the drawings.

### First Embodiment

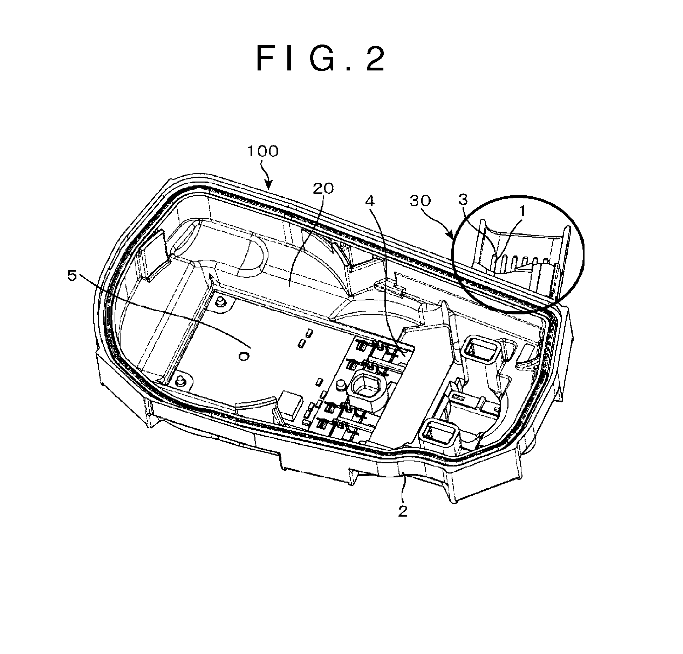

Fig. 2 shows an appearance of a sensor cover to which the invention is applied, and a connector portion partially broken.

In Fig. 2, a sensor cover 100 has a connector 30 forming an electric connection portion. The connector 30 has a plurality of metal terminals 1 comprising a copper type alloy material as a metal member which is insert molded to a casing resin portion 2. The casing resin portion 2 as a resin member forms the sensor cover 100. The casing resin portion 2 is formed of a thermoplastic resin PBT (polybutylene terephthalate). The metal terminal 1 is exposed at one end 3 to the outer space of the casing resin portion 2 (space in the connector 30 formed by the casing resin portion 2), and exposed at the other end 4 in a space inside the cover formed by the casing resin portion 2.

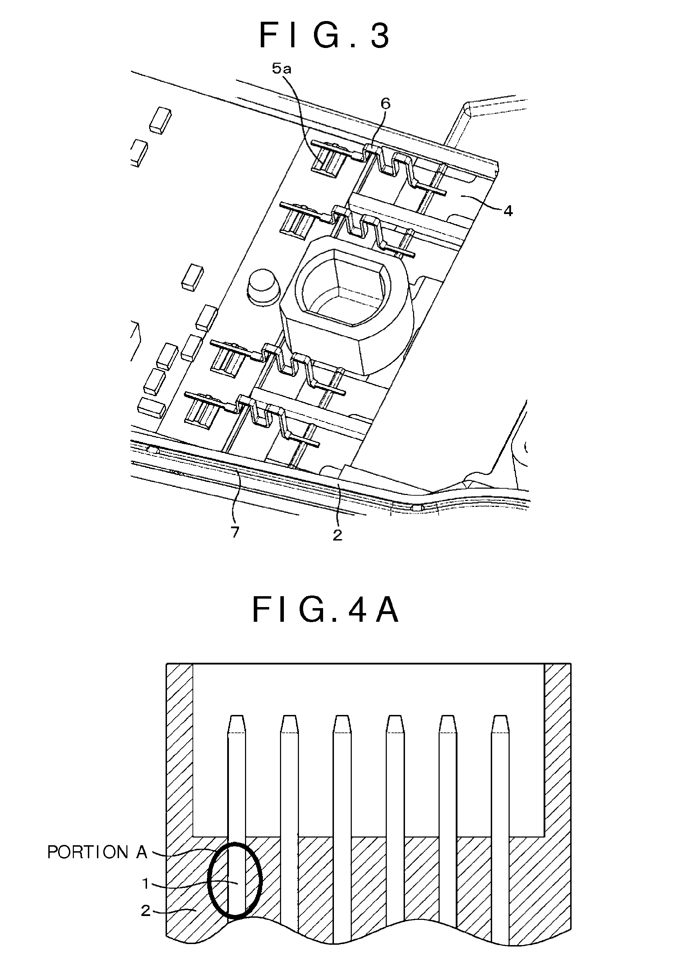

An electronic circuit substrate 5 is fixed to the inner wall surface of the sensor cover 100 formed of the casing resin portion 2. As shown in Fig. 3, the other end 4 of the metal terminal 1 exposed to the inner space 20 of the sensor cover 100 and a conductive joining protrusion 5a formed on the electronic circuit substrate 5 are joined by welding to one end and the other end of the conductor 6 respectively to form a signal transfer portion for transferring electric signals to an external device.

In the sensor cover 100, a rubber seal 7 is attached to a portion of a frame which becomes an abutting portion to be attached to the sensor cover 100, for example, a throttle body (not illustrated) so as to surround the inner space 20 of the sensor cover 100.

Thus, when the sensor cover 100 is attached to the throttle body (not illustrated), the air tightness of the inner space 20 of the sensor cover 100 is ensured such that moisture, gas, etc. do not intrude into the inner space 20 of the sensor cover 100. Thus, the electronic circuit attached to the electronic circuit substrate 5 is protected against corrosion.

However, if portions protruding and exposing to the inside and the outside of the casing resin portion 2 such as one end 3 and the other end 4 of the metal terminal 1 are present and if a gap is formed at the boundary surface where the metal terminal 1 and the casing resin portion 2 are in contact to each other in a range where the metal terminal 1 is buried in the casing resin portion 2 (resin mold), sufficient air tightness cannot be ensured between the inner space 20 of the sensor cover 100 and the outer space.

Particularly, in the field of automobile parts, since they are used under severe environmental conditions, it is necessary to ensure the durability of the casing resin portion 2, as well as the air tightness of the connector 30 for preventing intrusion of atmospheric matters that may cause undesired effects such as moisture, gas, etc. that may possibly corrode the electronic circuit portion.

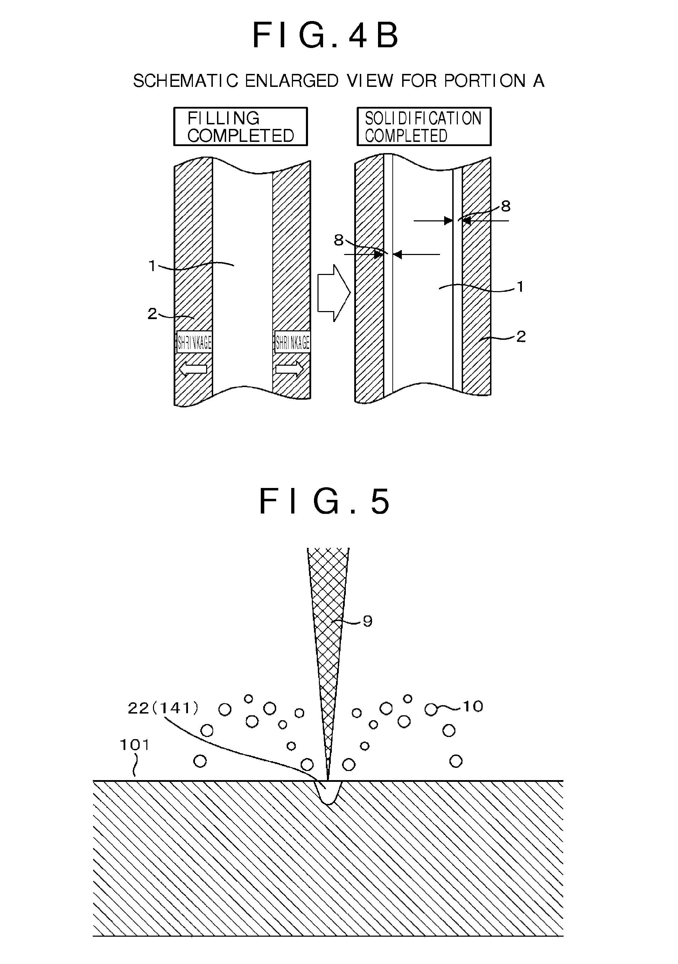

Fig. 4A is an enlarged cross sectional view for a portion of the connector 30 of the casing resin portion 2. Fig. 4B is an enlarged view for a portion A surrounded by a circle in Fig. 4A. In Fig. 4B, the state just after filling the heated and molted resin to the periphery of the metal terminal 1 is shown on the left of the drawing. On the contrary, the state where the resin covering the periphery of the metal terminal 1 is solidified and the temperature is lowered is shown on the right of the drawing.

When the resin covering the periphery of the metal terminal 1 is solidified and the temperature is lowered, the resin is shrank in the lateral direction (perpendicular to the longitudinal direction of the metal terminal 1) and in the vertical direction (longitudinal direction of the metal terminal 1) to change the volume. Therefore, a boundary surface gap 8 is formed between the resin and the surface of the metal terminal 1.

A resin injected at a high temperature and a high pressure into a mold is once filled in a state where the resin is adhered along the metal terminal 1. Then, since the casing resin portion 2 covering the periphery of the metal terminal 1 is shrank to change the volume along with cooling and solidification of the resin in the mold, the boundary surface gap 8 is formed at the boundary surface between the metal terminal 1 and the casing resin portion 2. The amount of the gap is in proportion to the volume of the resin at the periphery of the metal terminal 1 under the constant molding condition and the constant resin composition.

However, it is extremely difficult to control the shrinking direction of the resin covering the periphery of the metal terminal 1 when the volume of the resin at the periphery is not uniform or due to the anisotropy of shrinkage caused in the resin material containing a fibrous filler.

In view of the situations described above, a roughened surface portion having a constricted space in which the resin intrudes is previously formed on the surface of the metal terminal 1 where resin is covered by resin molding. The casing resin portion 2 formed by resin molding is not separated from the surface of the metal terminal 1 but kept in an adhered state even when volume change is caused upon solidification of the casing resin portion 2. Therefore, the air tightness is improved.

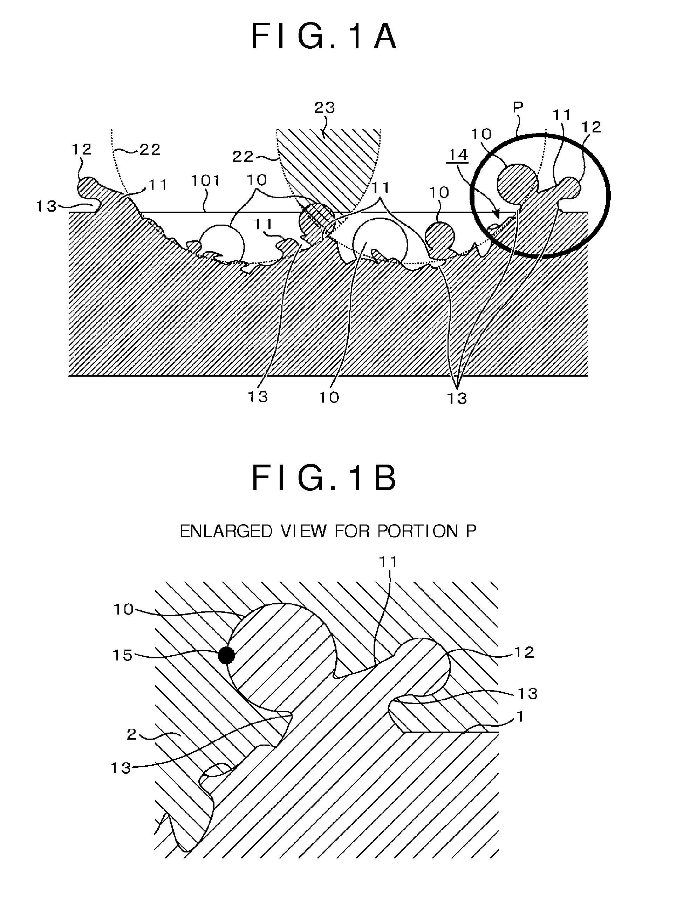

The first embodiment of the invention is to be described specifically with reference to Fig. 1A, Fig. 1B and Fig. 5 to Figs. 10A and 10B.

In this embodiment, as shown in Fig. 5, a micro region (22, 141) is concentrically irradiated with a high density energy beam, i.e., a laser beam 9 thereby melting the surface of the metal member 1 as the metal terminal to form a crater-like indent 22. In this embodiment, a groove 141 is formed by arranging three crater-like indents 22 in the direction of a minor axis of the metal terminal 1 so as to partially overlap to each other. Such several grooves are formed in parallel along the longitudinal direction. The grooves 141 can be formed also by irradiating with the beam while scanning the beam continuously in a predetermined direction.

The depth of the indent 22 or groove 141, or the particle size of the molten metal splash can be controlled by controlling the condition of irradiation. In this embodiment, a metal splash or a sputtered particle 10 having a grain size of 1 µm for the smaller particle and about 5 µm for the larger particle is generated and sprayed. The irradiation energy was controlled such that the crater-like indent 22 has a diameter of about 15 to 25 µm and a depth of about 5 to 10 µm.

As a result, as shown in Fig. 1A and Fig. 1B in this embodiment, the crater-like indents 22 are formed at the surface 101 of the metal member, and an intricate roughened surface is formed on the surface of the indent. Specifically, the gangue-like prominent portions 11 are formed all over the surface of the indent 22, and droplet-like nodules 12 are formed by a spherical metal splash of a relatively small diameter here and there at the top end of the prominent portion 11.

Further, in other prominent portion 11, a sputter particle 10 as a spherical metal splash of large diameter is secured and a constriction 13 is formed at the base thereof relative to the surface of the metal member or the surface of the indent thereby forming an intricate roughened surface portion 14. Further, fine unevenness of finer metal powder is formed on the surface of the gangue-like prominent portion 11, on the droplet nodule 12 formed at the top end of the prominent portion 11, on the sputtered particle 10 as the spherical metal splash of large diameter, or on the remaining surface of the metal member.

By concentrating a high energy to a micro region as in the laser fabrication or electron beam fabrication, the surface of the metal is instantaneously melted, and the molten metal splash, molten sputter, or dross melted by the impact waves of the generated plasma can be scattered.

In this case, temperature at the periphery of the irradiation portion rises only slightly. Accordingly, the scattered molten metal is cooled rapidly, protrudes from the surface of the metal terminal 1 as the base metal member, and forms a gangue-like prominent portion 11. A spherical nodule 12 formed on a certain portion at the top end is secured and forms a constriction 13 while maintaining the shape. Further, the sputtered particle 10 as the spherical metal splash of a relatively large diameter is deposited on the intricately formed prominent 11 and, at the same time, cooled and secured rapidly to form a constriction 13.

As shown in Fig. 1A, by setting an irradiation condition that the crater-like indents 22 have a partially overlapped region 23, the gangue-like prominent portion 11, the droplet-like nodule 12 formed at the top end of the prominent portion 11 formed by melting and scattering the surface of the metal member, and the sputtered particle 10 as the spherical metal splash of large diameter can be overlapped in a more intricate manner.

Fig. 1B shows an enlarged portion 14 in Fig. 1A.

Fig. 1B shows a state where a casing resin portion 2 as resin member is molded to the metal terminal 1 as the metal member shown in Fig. 1A.

When a resin is cast to the surface of the gangue-like prominent portion 11, the droplet-like nodule 12 formed at the top end of the prominent portion 11, the sputtered particle 10 as the spherical metal splash of large diameter, or the remaining surface of the metal member, the resin is applied around the gangue-like prominent portion 11, the droplet-like nodule 12 formed at the top end of the prominent portion 11, the sputtered particle 10 as the spherical metal splash of a large diameter, and the constriction 13 thereof.

In this embodiment, the surface area of the boundary surface 15 between the metal terminal 1 and the casing resin portion 2 is increased outstandingly compared with that of the roughened surface formed by the existent fabrication method. As a result, in the boundary surface 15 between the metal terminal 1 and the casing resin portion 2, since the total distance of the fluid channel from one end 3 of the metal terminal 1 exposing into the space in the connector 30 to the other terminal 4 exposing in the inner space 20 of the sensor cover 100 is made longer to increase the pressure loss of the fluid, the fluid less leaks or intrudes.

As described above, adhesion and air tightness are improved at the boundary surface where the metal part and the resin are in contact to each other.

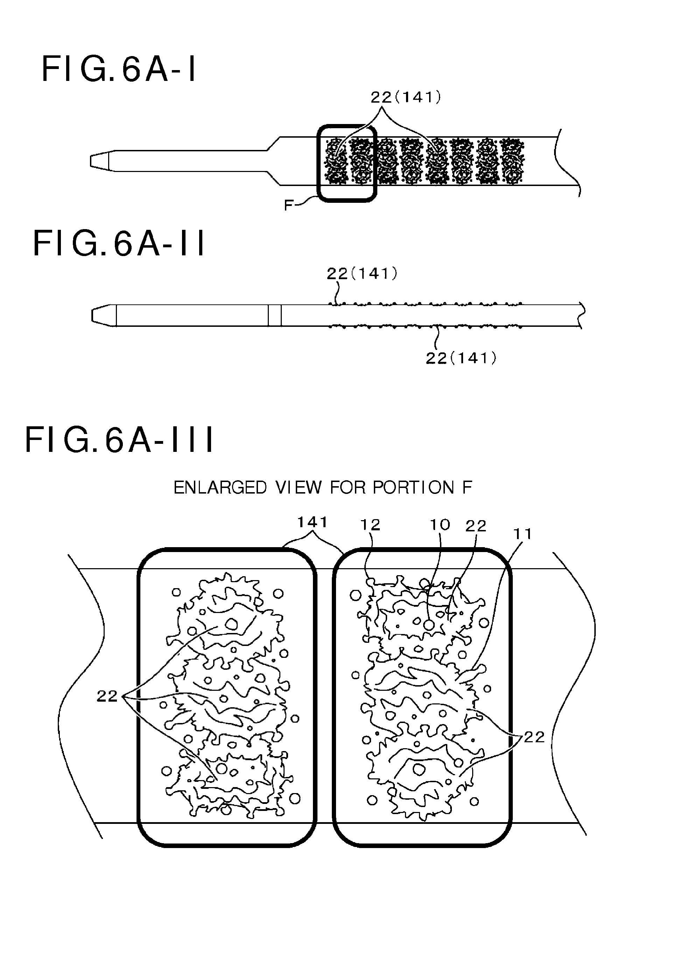

Fig. 6A-I shown in the uppermost portion of the drawing shows crater-like indents 22 which are formed by the number of three in close adjacent so as to partially overlap to each other on the surface of the metal terminal 1 and, as a result, form grooves 141. Further, such grooves 141 are arranged in parallel by a plurality of rows in the longitudinal direction of the metal terminal. Fig. 6A-II shown in the middle portion of the drawing shows a cross sectional view of Fig. 6A-I. Fig. 6A-III shown in the lowermost portion of the drawing is an enlarged view for the portion F in Fig. 6A-I.

Further, Fig. 11A in the uppermost portion of the drawing shows crater-like indents 22 which are formed on the surface of the metal terminal 1 in close adjacent by the number of three so as to partially overlap to each other and, as a result, form grooves 141. Such grooves 141 are arranged by 8 rows in parallel in the longitudinal direction of the metal terminal. Fig. 11B shown in the middle portion of the drawing shows the side elevational view of Fig. 11A. Fig. 11C is an enlarged cross sectional view along line A-A of Fig. 11A which shows an enlarged cross sectional view for a portion G in Fig. 11B. In the drawing, L1 shows a diameter of the crater-like indent 22 (width of groove 141). L2 shows a depth of the crater-like indent 22 (depth of groove 141). L3 shows a distance between the center portion of the groove 141 and that of the adjacent groove 141.

As a result of surface roughening fabrication for the surface of the metal terminal 1 (bronze terminal) as the metal member, a roughened surface portion 14 can be confirmed. The roughened surface portion 14 comprises gangue-like prominent portions 11 formed in an intricate manner, spherical nodules 12 formed by solidification of droplets on the top end of the prominent portion, a nodule 10 having a constriction 13 formed by solidification of a sputtered particle of a relatively large particle diameter (5 µm) and, further, fine metal powder of 1 to 3 µm deposited to the surface thereof.

Figs. 6B-I and 6B-II show analysis photographs of the roughened surface portion 14 by a scanning electron microscope as reference data.

Fig. 6B-I shows a result of photographic analysis in which crater-like indents 22 are spotted at a distance. Fig. 6B-II shows the result of photographic analysis in which crater-like indents 22 are partially overlapped to form a groove as in this embodiment. While the surface can be roughened to some extent also by the embodiment shown in Fig. 6B-I, it is recognized that the surface roughening is improved further in Fig. 6B-II. In view of the above, it can be seen that a roughed surface state conforming to the requirement can be formed by selecting the irradiation condition.

In this embodiment, it is necessary that the prominent portion 11, and the spherical nodule 12 and the sputtered particle 10 formed at the top end thereof have such a size that the molded resin can be cast into the space at the periphery of the constriction 13 to be formed. Preferably, the particle diameter is suitable to formation of a gap of about 1 to 20 µm.

However, the anchoring effect of the resin can be attained also when the size is less than that described above depending on the kind of the casing resin portion 2 used for covering and the pressure applied to the resin. The particle diameter is decided by the molded resin member, the molding area, the force exerting on the boundary surface, etc., and the intensity of the high energy beam is set conforming to the particle diameter.

Generally, the sputtered particle 10 and the dross formed by laser fabrication are materials deposited on the surface of a work and giving undesired effect on the quality. For avoiding sticking, a coating agent is coated or the sputtered particle 10 and the dross are removed by jetting an assist gas. In the invention, since the roughened surface is formed on the surface of the metal member by utilizing such unnecessary materials, coating of the coating agent or jetting of the assist gas is not necessary, which can further simplify the fabrication and reduce the cost.

In the embodiment described above, sensor covers as the composite molded bodies were manufactured by using a metal terminal to which the surface roughening fabrication according to the invention was applied and a metal terminal to which with the surface roughening fabrication was not applied under constant molding conditions. The air tightness was evaluated by using a test apparatus shown in Fig. 7 and the result is to be described below.

A sensor cover 100 as a composite molded body was positioned and set to a test jig 16 fixed on a testing apparatus. A partitioning rubber plate 18 is formed into a shape so as to adhere at the entire circumference to the upper end surface 17 of the inner space (20) of the sensor cover 100 as the composite molded body, and has a sealing performance. The partitioning rubber plate is mounted and secured to a test jig, and the test jig was pressed and fixed under a pressing force of 120N.

Then, after depressurizing and stabilizing the inner space 20 of the sensor cover 100 as the composite molded body at a pressure of 70 kPa, measurement for the internal pressure was started, and the amount of leakage per prescribed time was evaluated depending on the amount of change thereof and the volume in the inner space 20.

As a result, as shown by the test result in Fig. 8, decrease in the amount of leakage by 69% to 78% was confirmed for the sensor cover as the composite molded body using the metal terminal according to the invention in the case of the average amount of leakage being assumed as 1 for the sensor covers (n = 3) as the composite molded body using metal terminal not subjected to the surface roughening fabrication.

Then, Fig. 9 shows a result obtained by carrying out a heat cycle resistant test by using the sensor covers 100 as identical composite molded body.

The evaluation condition was set at -58°C (1 hr) and at 150°C (1 hr), which were defined as 1 cycle (1 cycle = 4 hr), and sensor covers as the composite molded body were taken out of the vessel on every 42 cycles and an air tightness test was carried out up to 400 cycles. As a result, the amount of leakage after the test changed by the amount of change within a level of a measuring error for the whole number of products to be evaluated and it was confirmed that the resin composite molded body obtained by the manufacturing method of the invention can maintain excellent adhesion and air tightness even under severe circumstances.

### Second Embodiment

While the processing of roughening the surface to a metal member having a single plane shape was described as an example, the configuration of the metal material or part is not restricted thereto.

In the method of melting the surface of a metal by the irradiation of a high density energy beam such as a laser beam or an electron beam, it is necessary to concentrate the energy to a micro region. Accordingly, with the view point of the productivity, it can be said that a single plane is advantageous as the form of a work.

However, as shown in Figs. 10A and 10B, a roughened surface portion 14 formed on the surface of a metal member 21 according to the invention has a plurality of grooves 141. In addition, a solidified portion of a metal splash comprising gangue-like prominent portions or prominent portions each having a constriction with a spherical nodule at the top end was formed on the surface of the grooves and the surface of the metal member 21 between the adjacent grooves 141.

In the composite molded member having such a configuration, since the molded resin member is not detached easily from the surface of the metal member 21, it can sufficiently withstand the change of shape after the processing of surface roughening. Accordingly, after forming the roughened surface portion 14, the product can be changed into a shape desired for the metal member. Further, the roughened surface portion may be disposed on both surfaces and for the entire circumference of the metal member.

Subjects to be solved are to be arranged and described with reference to the embodiment.

This embodiment concerns a surface roughening technique for the metal surface for improving the adhesion between different materials of a metal and a resin.

A resin composite molded body having an electric connection portion formed by inserting a metal part in which a portion thereof protrudes from the resin casing is used in various industrial fields, for example, as sensor parts having electronic circuits with an aim for various electric connection. Among all, in the field of automobile parts, since the resin composite molded body is used under severe circumstantial conditions, it is necessary to ensure the durability of the resin portion as the casing, as well as air tightness for preventing intrusion of atmospheric matters that may cause undesired effects such as moisture, gas, etc. that may corrode the inside of the electronic circuit.

However, in usual insert molding methods for metal parts, the metal part and the resin are not adhered at the boundary surface where they are in contact to each other, and a fine gap is formed due to the solidification step of the molded resin or the change of circumstantial temperature. Thus, it is difficult to ensure sufficient adhesion and air tightness.

Accordingly, as means for enhancing the adhesion between different materials of a metal and a resin, the following methods have been adopted: a method of roughening the surface of a metal part by chemical etching; a method of forming a compound layer forming an adhesion agent between the surface of a metal part and the resin; or a method of applying plating to the surface of the metal part.

Japanese Patent No. 3467471 discloses a method of manufacturing a composite molded resin body in which a metal part is inserted and the metal part protrudes from a resin portion, and which has air tightness at a resin/metal boundary surface.

The manufacturing method includes previously applying chemical etching to the surface of a metal part comprising copper, a copper alloy, aluminum, or an aluminum alloy, then, inserting the metal part into a mold of an injection molding machine, and performing injection molding by using a thermoplastic resin material.

The thermoplastic resin comprises, as a main ingredient, at least one or more of resins selected from the group consisting of polyacetal resin, polyethylene terephthalate resin, polybutylene terephthalate resin, polyphenylene sulfide resin, polyamide resin, liquid crystal polyester resin, polyimide resin, syndiotactic polystyrene resin, and polycyclohexane dimethylene terephthalate resin.

International laid-open pamphlet of WO 04/041532 discloses a method of producing a structure comprising a thermoplastic resin composition and an aluminum alloy shaped product. The method includes integrally depositing a thermoplastic resin composition containing polyphenylene sulfide as an ingredient on the surface of an aluminum alloy shaping product by an injection molding method, etc. The aluminum alloy shaped product is dipped into one or more of aqueous solutions selected from ammonia, hydrazine, and water soluble amine compound as a pretreatment.

JP-2007-221099-A discloses a manufacturing method of dipping a metal in a solution containing a triazine compound and an organic compound or dipping the metal in a solution containing a triazine compound, then dipping the metal into a solution containing an organic compound thereby forming a layer containing the triazine compound, and then forming a resin layer thereby forming an adhesion agent between the metal and the resin layer to adhere the metal and the resin layer.

JP-2-308555-A discloses a manufacturing method of applying plating to a roughened surface of a lead frame, thereby forming an expanded portion to an acute apex portion on the outer surface and forming a plurality of spaces where expanded portions are extended on the outer surface, then filling a sealing resin in the space. The filled resin per se restricts the movement of the sealing resin in the direction that the sealing resin is apart, in corporation with the expanded portions of the plating layer thereby improving the close bondability and adhesion effect.

Since compact design is demanded for the composite molded body as a portion of an electric circuit device, the shape of the metal terminal used therefor naturally becomes intricate and a smooth surface is required for the electric contact portion of the terminal. Accordingly, in the etching method of roughening the surface of the metal terminal thereby improving the adhesion with the resin, it is necessary to restrict the area to be roughened. That is, for roughening the surface partially, a pretreatment such as masking is necessary for the area not to be roughened.

Further, also in the method of forming the compound layer of forming the adhesive agent to adhere the resin on the surface of the metal part, or a method of applying plating on the surface of the metal part, many processing steps are necessary for forming the compound layer and strict quality control for metal parts and waste liquid disposal of the agent to be used are required.

That is, although the aimed adhesion and air tightness can be ensured by the well-known technique of chemical pretreatment to the surface of the metal part, this complicates the manufacturing step, which leads to lowering of the productivity and increase in the cost.

In view of the problems described above, this embodiment intends to provide a method of manufacturing a composite molded resin body having sufficient adhesion and air tightness at a reduced cost by enhancing the adhesion between the different materials of a metal and a resin without complicating the manufacturing steps.

For attaining the purpose, according to the embodiment described above, the composite molded resin body having an electric connection portion formed by inserting a metal terminal in which a portion thereof protrudes from the resin casing is produced by positioning the metal terminal at a predetermined position in a molding die and performing resin molding.

Alternatively, the composite molded resin body is produced by positioning a primary molded body, in which a metal terminal is previously resin molded, to a predetermined position in a molding die and performing secondary molding. In any of the manufacturing methods described above, the volume change of the resin is caused along with the shrinkage of the resin upon solidification of the molten resin in the molding die and a fine gap is formed at the boundary surface where the inserted metal terminal and the resin are in contact to each other.

In this embodiment, a roughened surface is formed by previously irradiating with a high density energy beam such as a laser beam or an electron beam the surface of a metal part to be covered with the resin molding. The resin keeps an adhered state upon solidification of the resin without separation from the surface of the metal part even when volume change is caused, which improves the air tightness.

In the roughened surface formed previously on the surface of the metal part, the metal surface has crater-like intricate indents formed by melting and scattering of the metal surface by irradiation of a high density energy beam such as a laser beam or an electron beam, and has gangue-like prominent portions and a spherical metal splash formed at the top end of the prominent portion at the periphery thereof. Accordingly, by using the irradiation condition that the crater-like indents partially overlap in some regions, the metal splash is scattered and adhered as the particular to sputter and the crater-like indent shape has a further intricate roughened surface shape.

Since the molded resin intrudes into the intricate constricted space formed by the surface roughened shape, the adhesion and the air tightness at the boundary surface where the metal part and the resin are in contact to each other are improved by the effect of generating the anchoring effect against the volume change in the direction where the resin is peeled from the surface of the metal part and the effect of increasing the surface area at the boundary surface where the metal part and the resin are in contact to each other.

In the composite molded resin body according to this embodiment, a composite molded resin body having adhesion and air tightness can be provided at a low cost without complicating the manufacturing steps by enhancing the adhesion between the different materials of a metal and a resin.

Practical embodiments 1 to 6 of the preferred embodiment described above are to be explained below.

### Embodiment 1

In a surface processing method of a metal material or a part, a metal surface has a crater-like intricate indent shape formed by melting and scattering of the metal surface by irradiation of a high density energy beam such as a laser beam or an electron beam. The metal surface has gangue-like prominent portions formed by melting and scattering of the metal surface, a spherical metal splash formed at the top end of the prominent portion, and a surface roughened shape where particulate sputtering caused upon fabrication is adhered securely by using the irradiation condition that the crater-like indent fabrication provides a partially overlapped region. The roughened surface shape comprises a joined shape of providing a strong adhesion with a different material.

### Embodiment 2

In a method of manufacturing composite molded resin body, a metal surface has a crater-like intricate indent shape formed by melting and scattering of the metal surface by irradiation of a high density energy beam such as a laser beam or an electron beam. The metal material has gangue-like prominent portions formed by melting and scattering of the metal surface, a spherical metal splash formed at the top end of the prominent portion, and a surface roughened shape where particulate sputtering caused upon fabrication is adhered securely by using the irradiation condition that the crater-like indent fabrication provides a partially overlapped region. The resin covering the roughened surface shape portion intrudes into a constricted space formed by the roughened surface shape, thereby providing an anchoring effect against the volume change in the direction where the resin is peeled from the surface of the metal member, and improving the adhesion and the air tightness at the boundary surface where the metal member and the resin are in contact to each other.

### Embodiment 3

In a method of manufacturing composite molded resin body, a metal surface has a crater-like intricate indent shape formed by melting and scattering of the metal surface by irradiation of a high density energy beam such as a laser beam or an electron beam. The metal material has gangue-like prominent portions formed by melting and scattering of the metal surface, a spherical metal splash formed at the top end of the prominent portion, and a surface roughened shape where particulate sputtering caused upon fabrication is adhered securely by using the irradiation condition that the crater-like indent fabrication provides a partially overlapped region. The resin covering the roughened surface shape portion intrudes into a constricted space formed by the roughened surface shape, thereby increasing the surface area of the boundary surface where the metal member and the resin are in contact to each other and increasing the pressure loss of a leaking fluid that passes through the boundary surface to improve the air tightness at the boundary surface where the metal member and the resin are in contact to each other.

### Embodiment 4

In a composite molded resin body incorporating a metal member and formed integrally with a resin, the metal surface has a crater-like intricate indent shape formed by melting and scattering of the metal surface by irradiation of a high density energy beam such as a laser beam or an electron beam. The metal material has gangue-like prominent portions formed by melting and scattering of the metal surface, a spherical metal splash formed at the top end of the prominent portion, and a roughed surface shape where particulate sputter formed upon fabrication is secured by using the irradiation condition that the crater-like indent fabrication provides partially overlapped regions.

### Embodiment 5

In the composite molded resin body according to Embodiment 4, the molded resin intrudes into a constricted space of a roughened surface shape formed to the surface of the metal member thereby providing an anchoring effect against the volume change in the direction where the resin is peeled from the surface of the metal member, and improving the adhesion and the air tightness at the boundary surface where the metal part and the resin are in contact to each other.

### Embodiment 6

In the composite molded resin body according to the Embodiment 4, the molded resin intrudes into the constricted space of the roughened shape formed to the surface of the metal member, thereby increasing the surface area at the boundary surface between the metal member and the resin in contact to each other, and increasing the pressure loss of a leaking fluid that passes through the boundary surface thereby improving the air tightness at the boundary surface where the metal part and the resin are in contact to each other.

Description has been made to the electric terminal and a resin molded body covering the same as an example of the sensor cover as the composite molded body, but the invention is applicable generally to composite molded bodies formed by adhering and integrating different materials of a metal member and a molded resin member. Further, the invention is applicable generally to various products not being limited to the electric terminal as the technique of roughening the surface of metal members.

Further, the sensor cover as the composite molded body of the preferred embodiment has been described for the example in which a metal terminal using a copper type alloy material is inserted and a PBT (polybutylene terephthalate) resin for the casing portion is used, but the combination of usable different materials are not restricted only to them. By irradiation of high density energy beams such as laser beams or electron beams, all sorts of combinations of different materials can be selected optionally as follows: metal materials capable of forming the roughened surface portion according to the invention, polymeric materials belonging to the group of thermoplastic resins and thermosetting resins, and elastomers.

Further, although the sensor cover is described as the example of the sensor cover as the composite molded body that requires the air tightness as the preferred embodiment, the invention is applicable to all sorts of composite molded resin bodies requiring one of characteristics such as improvement in the adhesion strength between different materials, and also the manufacturing method is not restricted only to the injection molding.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A composite molded body of a metal member and a molded resin member, comprising:
a metal member to be resin-molded provided with a plurality of indents (22) or grooves (141) at the surface (101) thereof; and
a solidified portion of a metal splash formed on the surface of the plurality of indents (22) or grooves (141) and on the surface of the remaining metal member, the solidified portion including
gangue-like prominent portions (11), and
other prominent portions (11) each having a constriction (13) and a spherical nodule (12) at the top end of the other prominent portion (11),
the gangue-like prominent portions (11) and the other prominent portions (11) being formed by a molten product of the metal member,
wherein the indents (22) or grooves (141) in the metal member and the remaining metal member are molded over the surfaces thereof with the resin member.

2. The composite molded body of the metal member and the molded resin member according to claim 1, wherein
the spherical nodule (12) is formed by sputter melted and scattered by a high energy beam.

3. The composite molded body of the metal member and the molded resin member according to claim 1 or 2, wherein
a dross is solidified on the surface of the solidified portion of the metal splash including the gangue-like prominent portions (11) and the other prominent portions (11) each having a constriction (13) and a spherical nodule (12) at the top end of the other prominent portion (11).

4. The composite molded body of the metal member and the molded resin member according to at least one of claims 1 to 3, wherein
the metal member is a metal terminal (1) serving as an electric conductor.

5. The composite molded body of the metal member and the molded resin member according to at least one of claims 1 to 4, wherein
the molded resin member is a sensor cover (100).

6. A method of surface processing of a metal member, comprising:
irradiating the surface of a metal member with a high density energy beam thereby forming grooves (141) or indents (22) on the surface of the metal member;
fluidizing or scattering the metal member melted by the heat of the high density energy beam to the surface of the grooves (141) or indents (22), and the surface of the metal member between them by the irradiation energy of the high density energy beam; and
solidifying the molten metal member on the surface of the grooves (141) or the indents (22) and the surface of the metal member between them, and forming a solidified portion of a metal splash including gangue-like prominent portions (11) and other prominent portions (11) each having a constriction (13) and a spherical nodule (12) at the top end of the other prominent portion (11), thereby roughening the surface of the metal member.

7. The surface processing method of the metal member according to claim 6, wherein
the fine splash of the metal member melted by the heat of the high density energy beam is solidified on the surface of the grooves (141) or indents (22), on the surface of the metal member between them, and on the surface of the solidified portions of the metal splash comprising the gangue-like prominent portions (11) or the other prominent portions (11) each having a constriction (13) and a spherical nodule (12) at the top end of the other prominent portion (11).

8. The surface processing method of the metal member according to claim 6 or 7, wherein
the high density energy beam is a laser beam (9).

9. The surface processing method of the metal member according to claim 6 or 7, wherein
the high density energy beam is an electron beam.

10. The surface processing method of the metal member according to claim 6, wherein
a mold resin is applied around the solidified portion of the metal splash including the gangue-like prominent portions (11) or the gangue-like prominent portions (11) each having a constriction (13) and a spherical nodule (12) at the top end thereof and the surface of the metal member is covered with the molded resin.

11. The surface processing method of the metal member according to claim 7, wherein
a molded resin is applied around the solidified portion of the metal splash including the gangue-like prominent portions (11) or the gangue-like prominent portions (11) each having a constriction (13) and a spherical nodule (12) at the top end thereof and the surface of the metal member is covered with the molded resin.
